# EUROPEAN PATENT APPLICATION

(11) **EP 4 270 708 A1**
(43) Date of publication of application: **01.11.2023**
(21) Application number: 22174699.3
(22) Date of filing: 20.05.2022
(51) Int. Cl.: H02J 1/10, H02J 7/34, H02M 3/335

(54) **APPARATUS AND SYSTEM FOR POWER CONVERSION AND METHOD FOR CONTROLLING THE APPARATUS**

(30) Priority: 25.04.2022 CN 202210442083
(71) Applicant: Hitachi Energy Switzerland AG, 5400 Baden (CH)
(72) Inventor: HUANG, Xing, Beijing, 100024 (CN); YANG, XiaoBo, Beijing, 100015 (CN)
(74) Representative: Vossius & Partner Patentanwälte Rechtsanwälte mbB

(57) **Abstract**

An apparatus for power conversion is provided. The apparatus comprises: a plurality of partial power converters (PPCs) (100, ..., 10n), wherein each of the plurality of PPCs (100, ..., 10n) comprises three ends (10, 20, 30), the three ends (10, 20, 30) being combined in pairs to form three sets of ends (1-2, 1-3, 2-3), and wherein a first one (S1) of the three sets of ends (1-2, 1-3, 2-3) is connected or connectable to a DC bus (120), and a second one (S2) of the three sets of ends (1-2, 1-3, 2-3) is connectable or connected to a respective power source (110) of a plurality of power sources (110, ..., lln).

## Description

### TECHNICAL FIELD

The present disclosure relates to the fields of power conversion, and more specifically, to an apparatus and a system for power conversion, a method for controlling an apparatus for power conversion.

### BACKGROUND

Energy Storage System (ESS) is a system that uses, for example, batteries (such as, lithium batteries, lead batteries) as energy storage carriers to store electrical energy and supply electrical energy for a certain period of time. The ESS is widely used in the power grid to adjust the peak and frequency of the power grid, thereby ensuring the safe operation of the power grid.

Conventional energy storage systems typically include multiple battery strings connected in parallel. In this case, if one of the multiple battery strings fails, it will affect the entire energy storage system. In addition, due to the manufacturing tolerance, the aging, the type and/or batch of battery cells, etc., there will be a circulating current between the battery strings connected in parallel in the ESS, which leads to the early failure of the small-capacity battery cells, thereby causing the failure of the entire battery strings, shortening the lifetime of the battery strings.

### SUMMARY

The present disclosure provides an apparatus and a system for power conversion, a method for controlling an apparatus for power conversion according to the present disclosure.

According to an aspect of the present disclosure, an apparatus for power conversion is provided. The apparatus includes a plurality of partial power converters (PPCs), wherein each of the plurality of PPCs comprises three ends. The three ends are combined in pairs to form three sets of ends, wherein a first one of the three sets of ends is connected or connectable to a DC bus, and a second one of the three sets of ends is connectable or connected to a respective power source of a plurality of power sources.

According to another aspect of the present disclosure, a method for controlling an apparatus for power conversion is provided. The apparatus comprises a plurality of PPCs, wherein a first PPC of the plurality of PPCs comprises three ends. The three ends are combined in pairs to form three sets of ends, wherein a first one of the three sets of ends is connected or connectable to a DC bus, and a second one of the three sets of ends is connectable or connected to a first power source of a plurality of power sources. The first PPC comprises a first AC-DC converter and a second AC-DC converter. The method comprises: obtaining a working state of the first power source, the working state comprising a charging state and a discharging state; and bringing at least one of the first AC-DC converter and the second AC-DC converter into a controlled mode, based on the obtained working state, wherein in the controlled mode, at least one commutation switching device in an AC-DC converter works at a switching state.

According to a still another aspect of the present disclosure, a system for power conversion is provided. The system comprises a DC bus, a plurality of power sources, a power conversion system connected to the DC bus, and the apparatus for power conversion according to the present disclosure.

It should be understood that the content described in this section is not intended to identify critical or important features of the embodiments of the present disclosure, and is not used to limit the scope of the present disclosure either. Other features of the present disclosure will be easily understood through the following specification.

### BRIEF DESCRIPTION OF THE DRAWINGS

The drawings exemplarily show embodiments and form a part of the specification, and are used to illustrate example implementations of the embodiments together with a written description of the specification. The embodiments shown are merely for illustrative purposes and do not limit the scope of the claims. Throughout the drawings, like reference signs denote like but not necessarily identical elements.
Fig. 1 is a schematic diagram showing the system including the apparatus for power conversion according to one or more examples of the present disclosure.
Fig. 2 is a schematic diagram showing the partial power converter of the apparatus in Fig. 1 according to one or more examples of the present disclosure.
Fig. 3 is a schematic diagram showing the connection configuration of the partial power converter of Fig. 2 according to one or more examples of the present disclosure.
Fig. 4 is a schematic diagram showing the connection configuration of the partial power converter of Fig. 2 according to further examples of the present disclosure.
Fig. 5 is a flowchart showing a method for controlling an apparatus for power conversion according to one or more examples of the present disclosure.
Fig. 6 is a flowchart showing of mode selecting steps of the method of Fig. 5 according to one or more examples of the present disclosure.
Fig. 7 is a control block diagram showing additional control steps of the method of Fig. 5 according to one or more examples of the present disclosure.
Fig. 8 is a control block diagram showing additional control steps of the method of Fig. 5 according to further examples of the present disclosure.
Fig. 9 is a control block diagram showing additional control steps of the method of Fig. 5 according to further examples of the present disclosure.
Fig. 10 is a structural block diagram showing an apparatus for controlling an apparatus for power conversion according to one or more examples of the present disclosure.

### DETAILED DESCRIPTION OF THE EMBODIMENTS

The present disclosure will be further described in detail below with reference to the drawings and embodiments. It can be understood that embodiments described herein are used merely to explain a related disclosure, rather than limit the disclosure. It should be additionally noted that, for ease of description, only parts related to the related disclosure are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules. As used herein, the term "and/or" includes any and all combinations of one or more of the associated listed items. The term "based on" is to be construed as "based at least in part on".

At present, due to the manufacturing tolerance, the aging, the type and/or batch of battery cells, etc. of the battery cells, there will be a circulating current between the battery strings in parallel in the energy storage system, which affects the balance of the state of charge (SOC), thereby causing the failure of the entire battery string, shortening the lifetime. In the related art, multiple battery strings are decoupled with each other through the additional full power converter (such as DC-DC converter), to limit the circulating current. However, there are some disadvantages in the related art, such as the increasing of the capital cost (such as, the cost of the converter), and the decreasing of the power efficiency.

Aiming at this problem, the present disclosure provides an apparatus for power conversion, in which a plurality of power sources is decoupled through the partial power converters.

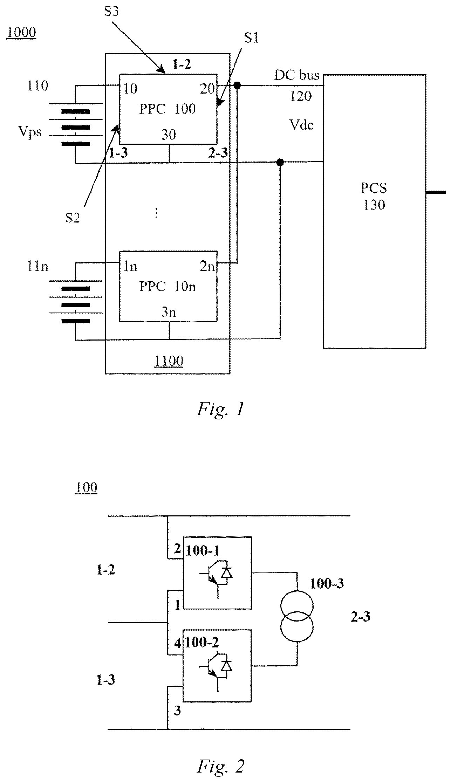

Fig.1 is schematic diagrams showing the system 1000 including the apparatus 1100 for power conversion according to one or more examples of the present disclosure. As shown in Fig. 1, the system 1000 may include a DC bus 120, a plurality of power sources 110, ..., 11n; a power conversion system (PCS) 130 connected to the DC bus 120; and the apparatus 1100 for power conversion. The apparatus 1100 comprises a plurality of PPCs 100, ..., 10n. Each of the plurality of PPCs 100, ..., 10n comprises three ends (such as, ends 10, 20, 30 for the PPC 100, ends 1n, 2n, 3n for the PPC 10n). The three ends 10, 20, 30; ...; 1n, 2n, 3n are combined in pairs to form three sets of ends 1-2, 1-3, 2-3. A first one S1 (hereinafter referred to as the first set S1) of the three sets of ends 1-2, 1-3, 2-3 is connected or connectable to the DC bus 120, and a second one S2 (hereinafter referred to as the second set S2) of the three sets of ends 1-2, 1-3, 2-3 is connectable or connected to the respective power source of a plurality of power sources 110, ..., 11n.

Herein, the partial power converter in present disclosure refers to a converter having partial power processing characteristic, i.e., a fraction of the power goes directly from the source to the load bypassing the converter and the remaining power is processed by the converter, so that the global efficiency can be improved and the capital cost can be decreased compared with the full power converter. In addition, the first one S1 of the three sets of ends 1-2, 1-3, 2-3 refers to any set of the three sets of ends 1-2, 1-3, 2-3, and the second one S2 of the three sets of ends 1-2, 1-3, 2-3 refers to any set of the two remaining sets of the three sets of ends 1-2, 1-3, 2-3 other than the first one S1.

Through the apparatus with the above features, the plurality of power sources can be decoupled through the plurality of PPCs, so that the circulating current caused by the manufacturing tolerance, the aging, the type and/or batch of the power sources can be eliminated by the respective PPC and the SOC can be balanced, thereby extending the lifetime of the power sources, and reusing the used power source, and integrating the different batch or type of power sources (such as, PV panels and batteries). Besides, the use of the partial power converters can decrease the cost of the converter and increase the power efficiency. In addition, power electronics based PPC can sense the battery fault, eliminate the fault influence, and the modular designed PPC is easy to be replaced, so that the maintenance time of PCS is shorted, and the maintenance cost is limited.

The features of at least one of the plurality of PPCs 100, ..., 10n in the apparatus 1100 are described below by taking the PPC 100 of FIG. 1 as an example.

In some embodiments, as for the first set S1 and the second set S2 of the three sets of ends 1-2, 1-3, 2-3, it is possible that, as shown in Fig. 1, the set 2-3 of ends forms the first set S1 connected to the DC bus 120, and the set 1-3 of ends forms the second set S2 connected to the respective power source, such as the power source 110. And it is also possible that the set 2-3 of ends forms the second set S2 connected to the respective power source 110, and the set 1-2 of ends forms the first set S1 connected to the DC bus 120. In addition, it is still possible that the set 1-3 of ends forms the first set S1 connected to the DC bus 120, and the set 1-2 of ends forms the second set S2 connected to the respective power source 110. However, it should be understood that the connection configuration of the three sets of ends 1-2, 1-3, 2-3 may not be limited to the above examples.

In some embodiments, the ratio of a first voltage Vdc on the first set S1 (i.e., on the DC bus 120) to a second voltage Vps on the second set S2 (i.e., on the respective power source) may be greater than 1, to achieve the partial power processing characteristic of the partial power converter, thereby reducing the cost of the converter and increasing the power efficiency. Specially, the ratio of the first voltage Vdc to the second voltage Vps may be close to 1, thereby optimizing the partial power processing characteristic of the partial power converter, to further increase the power efficiency and reduce the cost of the converter.

In some embodiments, the ratio of the first voltage Vdc on the first set S1 to the second voltage Vps on the second set S2 may be set based on at least one of: a circulating current to be controlled among the plurality of power sources 110, ..., 11n; a rated voltage difference between the respective power source 110 and a further power source of the plurality of power sources 110, ..., 11n; a voltage difference between a maximum voltage and a minimum voltage of the respective power source 110, when the respective power source 110 is a PV panel; cost budgeting; a power requirement of the respective power source 110.

In some embodiments, a third one S3 (hereinafter referred to as the third set S3) of the three sets of ends 1-2, 1-3, 2-3 may form a series connection with the respective power source 110 and form, together with the respective power source 110, a parallel connection with the DC bus 120. That is, in the case that the first set S1 and the second set S2 is connected to the DC bus 120 and the respective power source 110, respectively, the third one S3 of the three sets of ends 1-2, 1-3, 2-3 different from the first set S1 and the second set S2 may be operated as a controlled power configured to form a series connection with the respective power source 110 and form, together with the respective power source 110, a parallel connection with the DC bus 120. This can be achieved by, for example, controlling the positive and negative directions of the third set S3, i.e., the controlled power. In this circumstance, the voltage on the first set S1 may be equal to the sum of the voltage on the second set S2 and the voltage on the third set S3. The above configuration helps to achieve the partial power processing characteristic of the PPC, thereby bringing power and cost efficiency.

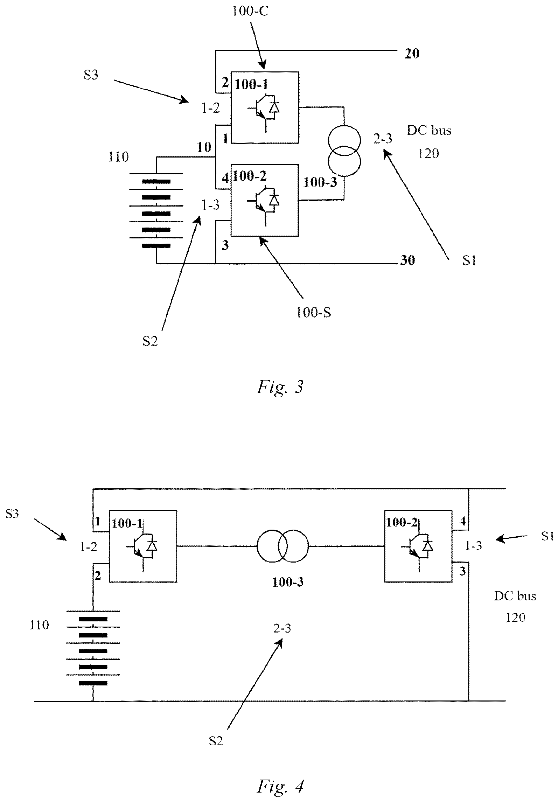

Fig. 2 is a schematic diagram showing the partial power converter 100 of the apparatus 1100 in Fig. 1 according to one or more examples of the present disclosure. Fig. 3 is a schematic diagram showing the connection configuration of the partial power converter 100 of Fig. 2 according to one or more examples of the present disclosure. Fig. 4 is a schematic diagram showing the connection configuration of the partial power converter 100 of Fig. 2 according to further examples of the present disclosure. The internal topology and connection configuration of the PPC will be described below with reference to Figs 2-4.

In some embodiments, each of the plurality of PPCs 100, ..., 10n, such as the PPC 100, may comprise a first AC-DC converter 100-1 and a second AC-DC converter 100-2. Herein, the term "AC-DC converter" is not intended to limit the conversion directions of AC and DC of the converter. The AC-DC converter may convert DC to AC or convert AC to DC. Any of the first and second AC-DC converters 100-1 and 100-2 may include a diode, a triode, a field effect transistor, and/ or thyristor and the like. For example, any of the first and second AC-DC converters 100-1 and 100-2 may have the following circuit structure: H bridge, IGBT, IGCT, MOSFET, GTO or a single diode, and the like.

A DC side of the first AC-DC converter 100-1 has a first DC end 1 and a second DC end 2, and a DC side of the second AC-DC converter 100-2 has a third DC end 3 and a fourth DC end 4. An AC side of the first AC-DC converter 100-1 and an AC side of the second AC-DC converter 100-2 are electromagnetically coupled or coupled through a capacitor. The "electromagnetically coupled" may refer to being coupled through a transformer 100-3 or inductor. In this case, the first DC end 1 is connected, for example short-circuited, to the fourth DC end 4 to form one of the three ends 10, 20, 30, and the second DC end 2 and the third DC end 3 form other two of the three ends 10, 20, 30. The partial power processing characteristic of the partial power converter can be achieved, through the connection of one of the DC ends of the first AC-DC converter 100-1 with one of the DC ends of the second AC-DC converter 100-2.

In some embodiments, as shown in Fig. 3, the first DC end 1 and the third DC end 3 form the second set S2 connected to the power source 110, while the second DC end 2 and the third DC end 3 form the first set S1 connected to the DC bus 120. In this case, when the power source 110 is at a discharging state, a part of the power goes directly from the power source 110 to the DC bus 120 bypassing the first AC-DC converter 100-1 and the second AC-DC converter 100-2 and the remaining power is processed by the first AC-DC converter 100-1 and the second AC-DC converter 100-2 and then delivered to the DC bus 120. In some other embodiments, as shown in Fig. 4, the first DC end 1 and the third DC end 3 form the first set S 1 connected to the DC bus 120, while the second DC end 2 and the third DC end 3 form the second set S2 connected to the power source 110. In some other embodiment, the first DC end 1 and the second DC end 2 form the second set S2 connected to the power source 110, while the second DC end 2 and the third DC end 3 form the first set S1 connected to the DC bus 120. However, it should be understood that the connection configuration of the first, second and third DC ends 1, 2, and 3 may not be limited to the above examples.

In some embodiments, the first DC end 1 or the fourth DC end 4, i.e., the ends connected with each other, is connectable or connected to one of a positive side of the DC bus 120, a negative side of the DC bus 120 or a positive side of the respective power source 110 and the like.

In some embodiments, in at least one of the plurality of PPCs 100, ..., 10n, at least one commutation switching device in the first AC-DC converter 100-1 or the second AC-DC converter 100-2 may be a controllable device and be configured to work at a normally open or normally closed state, and the other commutation switching devices in the first AC-DC converter 100-1 or the second AC-DC converter 100-2 may be configured to work at a switching state. The controllable device is able to be controlled and may include IGBT, IGCT, MOSFET, GTO, a triode and the like. The normally open state means that the switching device is always at a turn-off state, i.e., the switching device is configured to have a high impedance, so that the current through the switching device is very low, for example, even when the voltage across the switching device is very high. The normally closed state means that the switching device is always at a turn-on state, i.e., the switching device is configured to have a low impedance, so that the current through the switching device is high, for example, even when the voltage across the switching device is very low. The switching state means that the switching device is controlled and is capable of switching using, for example, a Pulse Width Modulation (PWM) technique or some other technique, i.e., the switching device can change between open state and closed state as needed. The commutation switching device may be a switching device for commutating the direction of the current in the converter, such as a triode, a field effect transistor, and thyristor, and the like. In this way, the unnecessary switching of the switching device can be avoided, thereby increasing the efficiency of the converter and reducing the power loss due to the continuous switching.

In some embodiments, in at least one of the plurality of PPCs 100, ..., 10n, at least one commutation switching device in the first AC-DC converter 100-1 or the second AC-DC converter 100-2 is an uncontrollable device, and the other commutation switching devices in the first AC-DC converter 100-1 or the second AC-DC converter 100-2 are controllable devices. That is, the above commutation switching device working at a normally open or normally closed state can be replaced with the uncontrollable device, such as diode, thereby decreasing the cost of the converter and increasing the efficiency of the converter.

In some embodiments, a rated power of each of the first AC-DC converter 100-1 and the second AC-DC converter 100-2 may be less than a rated power of the respective power source 110, thereby further reducing the cost of the converter and increasing the power efficiency.

In some embodiments, the plurality of power sources 110, ..., 1 In may comprise at least one of a battery, a PV panel or a grid etc., thereby integrating the different power sources in single energy storage system.

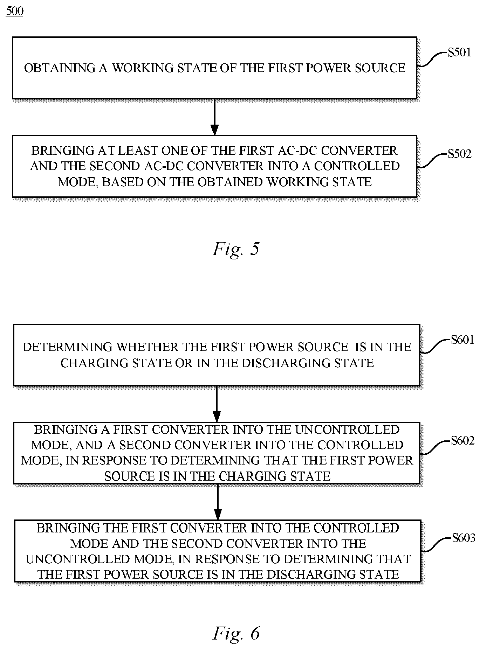

Fig. 5 is a flowchart showing a method 500 for controlling an apparatus for power conversion according to one or more examples of the present disclosure, in which the apparatus for power conversion is substantially the same as that of Figs. 1-4, and thus the details as to the same features are omitted here. The method 500 may include steps S501 to S502, which will be described in further detail with reference to Figs. 1-5 hereinafter. In addition, it should be understood that the control method 500 for at least one of the plurality of PPCs 100, ..., 10n in the apparatus 1100 will be described below by taking the PPC 100 (hereinafter referred to as the first PPC 100) and the respective power source 110 (hereinafter referred to as the first power source 110) of FIG. 1 as an example, which is not intended to limit only the PPC 100 controlled by the method 500.

In the step S501, a working state of the first power source 110 may be obtained.

The working state may comprise a charging state and a discharging state. In some embodiments, the working state of the first power source 110 may be obtained using sensor or measuring elements and the like. Additionally or alternatively, the working state of the first power source 110 may be manually set, i.e., set by a user.

In the step S502, at least one of the first AC-DC converter 100-1 and the second AC-DC converter 100-2 is brought into a controlled mode, based on the obtained working state.

Specifically, in some examples, for the connection configuration of the PPC 100 of Fig. 3, when the working state of the first power source 110 is the charging state, the first AC-DC converter 100-1 can be brought into the controlled mode, or both of the two AC-DC converters can be brought into the controlled mode, while when the working state of the first power source 110 is the discharging state, the second AC-DC converter 100-2 or both of the two AC-DC converters can be brought into the controlled mode. In some other examples, in the case that the first DC end 1 and the second DC end 2 are connected to the first power source 110, when the working state of the first power source 110 is the discharging state, the first AC-DC converter 100-1 or both of the two AC-DC converters can be brought into the controlled mode, while when the working state of the first power source 110 is the charging state, the second AC-DC converter 100-2 or both of the two AC-DC converters can be brought into the controlled mode. However, it should be understood that the control way would not be limited to the above examples.

In the controlled mode, at least one commutation switching device in an AC-DC converter works at a switching state. The commutation switching device is substantially the same as that of Figs. 1-4, and thus the details as to the same features are omitted here. The first AC-DC converter 100-1 and the second AC-DC converter 100-2 are substantially the same as those of Figs. 1-4, and thus the details as to the same features are omitted here.

Through the above method, any one or both of the first AC-DC converter 100-1 and the second AC-DC converter 100-2 can be selectively brought into a controlled mode, thereby improving the efficiency of PPC and reducing the power loss during the operation of PPC.

In some embodiments, the step S502 may include bringing one of the first AC-DC converter 100-1 and the second AC-DC converter 100-2 into the controlled mode, and another one of the first AC-DC converter 100-1 and the second AC-DC converter 100-2 into an uncontrolled mode. In the uncontrolled mode, all commutation switching devices in the AC-DC converter may work at a normally open or normally closed state. The normally open or normally closed state can avoid unnecessary switching of the switching devices, thereby improving the efficiency of PPC and reducing the power loss.

In some embodiments, when the second set S2 includes the first DC end 1 and one of the second DC end 2 and the third DC end 3 (i.e., the first AC-DC converter 100-1 or the second AC-DC converter 100-2 is connected to positive and negative ends of the first power source 110), bringing one of the first AC-DC converter 100-1 and the second AC-DC converter 100-2 into the controlled mode, and another one of the first AC-DC converter 100-1 and the second AC-DC converter 100-2 into an uncontrolled mode may include steps S601 to S603, as shown in Fig. 6.

In the step S601, it is determined whether the first power source 110 is in the charging state or in the discharging state. In response to determining that the first power source 110 is in the charging state, the method continues to the step S602, in which a first converter 100-S (Fig. 3) of the first AC-DC converter 100-1 and the second AC-DC converter 100-2 connected to a positive side and a negative side of the first power source 110 is brought into the uncontrolled mode, and a second converter 100-C (Fig. 3) of the first AC-DC converter 100-1 and the second AC-DC converter 100-2 is brought into the controlled mode. The second converter 100-C is different from the first converter 100-S. However, in response to determining that the first power source 110 is in the discharging state, the method continue to the step S603, in which the first converter 100-S is brought into the controlled mode, and the second converter 100-C is brought into the uncontrolled mode.

Taking the arrangement in Fig. 3 as an example, in which the first DC end 1 and the third DC end 3 of the first AC-DC converter 100-2 are connected to the power source 110, when the first power source 110 works in the charging state, the power partially flows from the first AC-DC converter 100-1 to the second AC-DC converter 100-2, i.e., from the second converter 100-C in the controlled mode to the first converter 100-S in the uncontrolled mode, which helps to control the converter in the uncontrolled mode by the converter in the controlled mode, thereby further improving the power efficiency of the converter and reducing the power loss. As such, when the power source 110 works at the discharging state, the power partially flows from the second AC-DC converter 100-2 to the first AC-DC converter 100-1, i.e., from the first converter 100-S in the controlled mode to the second converter 100-C in the uncontrolled mode.

Alternatively, in response to determining that the first power source 110 is in the charging state, the first converter 100-S can be also into the controlled mode, and accordingly the second converter 100-C can be into the uncontrolled mode, and in response to determining that the first power source 110 is in the discharging state, the first converter 100-S can be also into the uncontrolled mode, and accordingly the second converter 100-C can be into the controlled mode.

Although various operations are depicted in Figs. 5 and 6 as being in a particular order, this should not be construed as a requirement that these operations should be performed in the particular order shown or in a sequential order, nor should it be construed as a requirement that all operations shown should be performed to obtain the desired result. For example, step S603 may be performed before step S602, or concurrently with step S602.

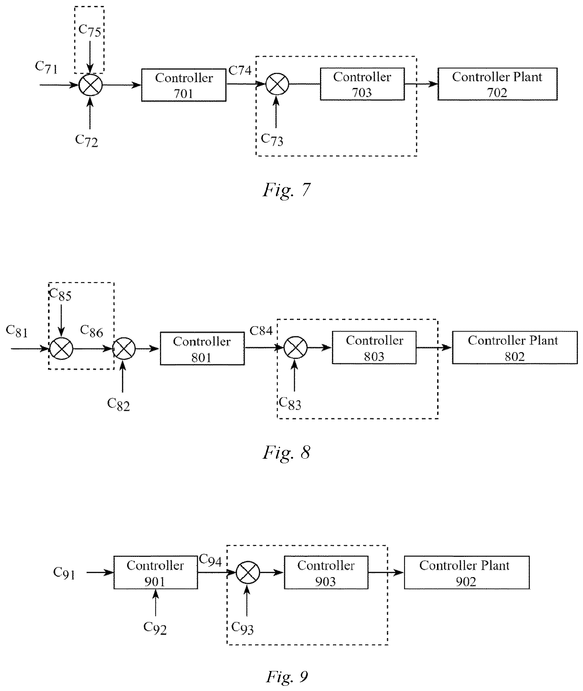

Fig. 7 is a control block diagram showing additional control steps of the method of Fig. 5 according to one or more examples of the present disclosure. Some additional control steps of method 500 are described below with reference to FIG. 7. The method 500 may also include: determining a control signal of the first PPC 100 based on a reference value C71 and a measured value C72 of a parameter of the first power source 110, the parameter of the first power source 110 comprising any of a current, a voltage or a power on the first power source 110; and sending the control signal to the one or both of the first AC-DC converter 100-1 and the second AC-DC converter 100-2 in the controlled mode. The reference value is a manually set value or a value set by an upper controller, and the measured value is an actual value measured in the current moment. For example, as shown in Fig. 7, the difference between a reference value C71 and a measured value C72 of any of a current, a voltage or a power on the first power source 110 is input into the controller 701 (including PI controller, PD controller, or PID controller etc.), to obtain an output value C74 as the control signal. Then, the control signal is sent to the controlled plant 702, i.e., the one or both of the first AC-DC converter 100-1 and the second AC-DC converter 100-2 in the controlled mode. It should be understood here that other existing control algorithms may also be employed to generate the control signal based on the reference value C71 and the measured value C72 of the parameter of the first power source 110. In this way, the power source 110 can be controlled in constant current/voltage/power charging mode, or constant current/voltage/power discharging mode, to meet the requirement for the stable operation of the system, for example, in the grid-connected or island mode.

In some embodiments, the determining the control signal of the first PPC 100 may comprise determining the control signal of the first PPC 100 based on the reference value C71, the measured value C72 and an adjusting value C75 of the parameter of the first power source 110. The adjusting value C75 is generated for example by the Battery Management System, BMS according to properties of the plurality of power sources 110, ..., 11n. For example, as shown in Fig. 7, the adjusting value C75 along with the reference value C71, the measured value C72 is input into a summator or subtractor and then the calculating result enters the controller 701. Alternatively, the adjusting value C75 can be added or subtracted from the reference value C71 to obtain an adjusted reference value, which then enters the controller 701 along with the measured value C72. Through the adding of the adjusting value according to properties of the plurality of power sources, the charge and discharge rates of the respective power source 110 can be adjusted, to eventually achieve simultaneous full charging/ discharging of the plurality of power sources 110, ..., 11n of the plurality of PPCs connected to the same PCS, and thus the plurality of power sources can be balanced and thus the whole system becomes more stable.

In some embodiments, the method 500 may further include updating the control signal of the first PPC 100 based on a measured voltage C73 on the third set S3. In the PPC, the voltage on the third set S3 (i.e., the controlled power) can directly reflect the control effect on the current, voltage or power on the second set S2, i.e., the first power source 110. Thus, the controlled plant can be controlled better by adding the measured voltage on the third set S3 to form a closed-loop control. For example, as shown in Fig.7, the measured voltage C73 on the third set S3 is subtracted from the output value C74 of the controller 701 to obtain the difference, which enters the controller 703 (including PI controller, PD controller, or PID controller etc.) to obtain the updated control signal.

Fig. 8 is a control block diagram showing additional control steps of the method of Fig. 5 according to further examples of the present disclosure. Other additional control steps of method 500 are described below with reference to FIG. 8. The method 500 may further include: determining a control signal of the first PPC 100 based on a first reference voltage C81 and a measured voltage C82 on the DC bus 120; and sending the control signal to the one or both of the first AC-DC converter 100-1 and the second AC-DC converter 100-2 in the controlled mode. The first reference voltage C81 is manually set value or a value set by an upper controller, and the measured voltage is an actual value measured in the current moment. For example, as shown in Fig. 8, the difference between the first reference voltage C81 and the measured voltage C82 on the DC bus 120 is input into the controller 801 (including PI controller, PD controller, or PID controller etc.), to obtain an output value C84 as the control signal. Then, the control signal is sent to the controlled plant 802, i.e., the one or both of the first AC-DC converter 100-1 and the second AC-DC converter 100-2 in the controlled mode. It should be understood here that other existing control algorithms may also be employed to generate the control signal based on the first reference voltage C81 and the measured voltage C82 on the DC bus 120. In this way, the voltage on the DC bus 120 can be controlled by the respective PPC to meet the requirement for stable operation of the system, for example, in the island mode.

In some embodiments, as for the plurality of PPCs 100, ..., 10n, it is possible that there is at least one PPC, which controls the voltage on the DC bus 120, i.e., the above control signal as described in Fig. 8 is sent to the at least one PPC. In order to further stable the whole system, the at least one PPC, which controls the voltage on the DC bus 120, may work in the master mode, and accordingly, all the rest PPCs of the plurality of PPCs 100, ..., 10n may work in the slave mode. Here, all the rest PPCs in the slave mode will be controlled by the at least one PPC in the master mode, i.e., follow the order from the at least one PPC in the master mode. Additionally or alternatively, a certain control (such as, droop control, etc.) may be applied to the at least one PPC, to achieve the stable operation of the system.

In some embodiments, in the case that the droop control is applied to the first PPC 100, the determining the control signal of the first PPC 100 based on the first reference voltage C81 and the measured voltage C82 on the DC bus 120 may comprise: calculating a second reference voltage C86 based on the first reference voltage C81 and a measured value C85 of any of an output current or an output power of the first PPC 100, in which the second reference voltage C86 is a droop function (such as a linear function, or a piecewise linear function etc.) of the measured value of any of the output current or the output power; and determining the control signal based on the second reference voltage and the measured voltage on the DC bus 120. For example, as shown in Fig. 8, the measured value C85 of any of an output current or an output power of the first PPC 100 can be added or subtracted from the first reference voltage C81 to obtain the second reference voltage C86. Then, the difference between the second reference voltage C86 and the measured voltage C82 on the DC bus 120 is input into the controller 801, to obtain an output value C84 as the control signal.

In some embodiments, a parameter of the droop function may be determined at least based on a desired voltage on the DC bus 120 set by an upper controller. Herein, the parameter of the droop function may include at least one of a slope, an offset or a coordinate of any point. In this way, the droop function can change dynamically with the desired voltage on the DC bus given by the upper controller, thereby balancing the control of the DC bus voltage by multiple PPCs and thus ensuring that the controlled voltage on the DC bus is stable in the desired value.

In some embodiments, the method 500 may further include updating the control signal of the first PPC 100 based on a measured voltage C83 on the third set S3, thereby improving the efficiency of the control. The controlled plant can be controlled better by adding the measured voltage on the third set S3 to form a closed-loop control. For example, as shown in Fig. 8, the measured voltage C83 on the third set S3 is subtracted from the output value C84 of the controller 801 to obtain the difference, which enters the controller 803 (including PI controller, PD controller, or PID controller etc.) to obtain the updated control signal.

Fig. 9 is a control block diagram showing additional control steps of the method of Fig. 5 according to further examples of the present disclosure. Other additional control steps of method 500 are described below with reference to FIG. 9. The method 500 may also include: determining a control signal of the first PPC 100 based on a measured voltage C91 and a measured current C92 of the first power source 110; and sending the control signal to the one or both of the first AC-DC converter 100-1 and the second AC-DC converter 100-2 in the controlled mode, thereby stabling the output of the first power source 110 (especially, PV panel). For example, as shown in Fig. 9, the measured voltage C91 and the measured current C92 of the first power source 110 are input into the controller 901 (including MPPT controller etc.), to obtain an output value C94 as the control signal. Then, the control signal is sent to the controlled plant 902, i.e., the one or both of the first AC-DC converter 100-1 and the second AC-DC converter 100-2 in the controlled mode.

In some embodiments, the method 500 may further include updating the control signal of the first PPC 100 based on a measured voltage on the third set S3, thereby improving the efficiency of the control. The controlled plant can be controlled better by adding the measured voltage on the third set S3 to form a closed-loop control. For example, as shown in Fig.9, the measured voltage C93 on the third set S3 is subtracted from the output value C94 of the controller 901 to obtain the difference, which enters the controller 903 (including PI controller, PD controller, or PID controller etc.) to obtain the updated control signal.

In some embodiments, the method 500 may include: determining whether the first power source 110 is faulty; and in response to determining that the power source is faulty, turning off the first PPC 100. For example, when the temperature of the first power source 110 exceeds the threshold value, the first power source is determined as faulty. By turning off the respective PPC 100, the fault current of the power source can be cut off, thereby eliminating the fault influence and preprocessing the fault (such as, a thermal runaway fault) of the power source.

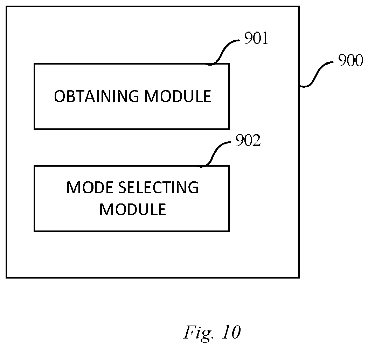

Fig. 10 is a structural block diagram showing an apparatus for controlling an apparatus for power conversion according to one or more examples of the present disclosure. As shown in Fig. 10, the apparatus 900 may include an obtaining module 901 configured to obtain a working state of the first power source 110, the working state comprising a charging state and a discharging state; a mode selecting module 902 configured to bringing at least one of the first AC-DC converter 100-1 and the second AC-DC converter 100-2 into a controlled mode, based on the obtained working state.

The function of each of the above-mentioned modules 901 to 902 may correspond to the steps S501 to S502 as illustrated in Fig. 5, and thus the similar details are omitted here.

According to the present disclosure, a computer readable storage medium is further provided, which includes instructions which, when executed by a processor, cause the processor to perform the method as described above.

According to the present disclosure, a computer program product is further provided, which, when executed by a processor, implements the method as described above.

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The related modules described in the embodiments of the present disclosure may be implemented by means of software, or may be implemented by means of hardware. The described modules may also be arranged in the processor, which for example may be described as: a processor, comprising an obtaining module and a mode selecting module. Names of these modules do not constitute a limitation on the modules themselves under certain circumstances.

The foregoing descriptions are merely preferred embodiments of the present disclosure and explanations of the applied technical principles. Those skilled in the art should understand that the scope of the present disclosure involved in the embodiments of the present disclosure is not limited to the technical solutions formed by specific combinations of the foregoing technical features, and shall also cover other technical solutions formed by any combination of the foregoing technical features or equivalent features thereof without departing from the foregoing inventive concept. For example, a technical solution formed by a replacement of the foregoing features with technical features with similar functions in the technical features disclosed in the embodiments of the present disclosure (but not limited thereto) also falls within the scope of the present disclosure.

## Claims

1. An apparatus for power conversion, comprising:
a plurality of partial power converters (PPCs) (100, ..., 10n),
wherein each of the plurality of PPCs (100, ..., 10n) comprises three ends (10, 20, 30), the three ends (10, 20, 30) being combined in pairs to form three sets of ends (1-2, 1-3, 2-3), and
wherein a first one (S1) of the three sets of ends (1-2, 1-3, 2-3) is connected or connectable to a DC bus (120), and a second one (S2) of the three sets of ends (1-2, 1-3, 2-3) is connectable or connected to a respective power source (110) of a plurality of power sources (110, ..., 11n).

2. The apparatus according to claim 1, wherein each of the plurality of PPCs (100, ..., 10n) comprises a first AC-DC converter (100-1) and a second AC-DC converter (100-2), a DC side of the first AC-DC converter (100-1) having a first DC end (1) and a second DC end (2), a DC side of the second AC-DC converter (100-2) having a third DC end (3) and a fourth DC end (4), and an AC side of the first AC-DC converter (100-1) and an AC side of the second AC-DC converter (100-2) being electromagnetically coupled or coupled through a capacitor,
wherein the first DC end (1) is connected to the fourth DC end (4) to form one of the three ends (10, 20, 30), and the second DC end (2) and the third DC end (3) form other two of the three ends (10, 20, 30), and
wherein a third one (S3) of the three sets of ends (1-2, 1-3, 2-3) forms a series connection with the respective power source (110) and form, together with the respective power source (110), a parallel connection with the DC bus (120).

3. The apparatus according to claim 2, wherein the first DC end (1) is connectable or connected to one of a positive side of the DC bus (120), a negative side of the DC bus (120) or a positive side of the respective power source (110).

4. The apparatus according to claim 2 or 3,
wherein in at least one of the plurality of PPCs (100, ..., 10n), at least one commutation switching device in the first AC-DC converter (100-1) or the second AC-DC converter (100-2) is a controllable device and is configured to work at a normally open or normally closed state, and the other commutation switching devices in the first AC-DC converter (100-1) or the second AC-DC converter (100-2) are configured to work at a switching state; and/or
wherein in at least one of the plurality of PPCs (100, ..., 10n), at least one commutation switching device in the first AC-DC converter (100-1) or the second AC-DC converter (100-2) is an uncontrollable device, and the other commutation switching devices in the first AC-DC converter (100-1) or the second AC-DC converter (100-2) are controllable devices.

5. The apparatus according to claim 2 or 3, wherein a rated power of each of the first AC-DC converter (100-1) and the second AC-DC converter (100-2) is less than a rated power of the respective power source (110).

6. The apparatus according to any of claims 1-3,
wherein the ratio of a first voltage on the first one (S1) to a second voltage on the second one (S2) is greater than 1.

7. The apparatus according to any of claims 1-3, wherein the plurality of power sources (110, ..., 11n) comprises at least one of a battery, a PV panel or a grid.

8. A method for controlling an apparatus for power conversion, wherein the apparatus comprises a plurality of partial power converters (PPCs) (100, ..., 10n), wherein a first PPC (100) of the plurality of PPCs (100, ..., 10n) comprises three ends (10, 20, 30), the three ends (10, 20, 30) being combined in pairs to form three sets of ends (1-2, 1-3, 2-3), wherein a first one (S1) of the three sets of ends (1-2, 1-3, 2-3) is connected or connectable to a DC bus (120), and a second one (S2) of the three sets of ends (1-2, 1-3, 2-3) is connectable or connected to a first power source (110) of a plurality of power sources (110, ..., 11n), and wherein the first PPC (100) comprises a first AC-DC converter (100-1) and a second AC-DC converter (100-2), the method comprising:
obtaining a working state of the first power source (110), the working state comprising a charging state and a discharging state; and
bringing at least one of the first AC-DC converter (100-1) and the second AC-DC converter (100-2) into a controlled mode, based on the obtained working state,
wherein in the controlled mode, at least one commutation switching device in an AC-DC converter works at a switching state.

9. The method according to claim 8, wherein a DC side of the first AC-DC converter (100-1) has a first DC end (1) and a second DC end (2), and a DC side of the second AC-DC converter (100-2) has a third DC end (3) and a fourth DC end (4), and an AC side of the first AC-DC converter (100-1) and an AC side of the second AC-DC converter (100-2) are electromagnetically coupled or coupled through a capacitor, wherein the first DC end (1) is connected to the fourth DC end (4) to form one of the three ends (10, 20, 30), and the second DC end (2) and the third DC end (3) form other two of the three ends (10, 20, 30), wherein a third one (S3) of the three sets of ends (1-2, 1-3, 2-3) forms a series connection with the first power source (110) and form, together with the first power source (110), a parallel connection with the DC bus (120), and wherein the bringing the at least one of the first AC-DC converter (100-1) and the second AC-DC converter (100-2) into the controlled mode comprises:
bringing one of the first AC-DC converter (100-1) and the second AC-DC converter (100-2) into the controlled mode, and another one of the first AC-DC converter (100-1) and the second AC-DC converter (100-2) into an uncontrolled mode, wherein in the uncontrolled mode, all commutation switching devices in the AC-DC converter work at a normally open or normally closed state.

10. The method according to claim 9, wherein the second one (S2) comprises the first DC end (1) and one of the second DC end (2) and the third DC end (3), and wherein the bringing one of the first AC-DC converter (100-1) and the second AC-DC converter (100-2) into the controlled mode, and another one of the first AC-DC converter (100-1) and the second AC-DC converter (100-2) into the uncontrolled mode comprises:
determining whether the first power source (110) is in the charging state or in the discharging state;
bringing a first converter (100-S) of the first AC-DC converter (100-1) and the second AC-DC converter (100-2) connected to a positive side and a negative side of the first power source (110) into the uncontrolled mode, and a second converter (100-C) of the first AC-DC converter (100-1) and the second AC-DC converter (100-2) into the controlled mode, in response to determining that the first power source (110) is in the charging state; and
bringing the first converter (100-S) into the controlled mode and the second converter (100-C) into the uncontrolled mode, in response to determining that the first power source (110) is in the discharging state.

11. The method according to claim 9, further comprising:
determining a control signal of the first PPC (100) based on a reference value and a measured value of a parameter of the first power source (110), the parameter of the first power source comprising any of a current, a voltage or a power on the first power source (110);
sending the control signal to the one of the first AC-DC converter (100-1) and the second AC-DC converter (100-2) in the controlled mode.

12. The method according to claim 11, wherein the determining the control signal of the first PPC (100) comprises:
determining the control signal of the first PPC (100) based on the reference value, the measured value and an adjusting value of the parameter of the first power source (110), the adjusting value being generated according to properties of the plurality of power sources (110, ..., 11n).

13. The method according to claim 9, further comprising:
determining a control signal of the first PPC (100) based on a measured voltage and a measured current of the first power source (110); and
sending the control signal to the one of the first AC-DC converter (100-1) and the second AC-DC converter (100-2) in the controlled mode.

14. The method according to claim 9, further comprising:
determining a control signal of the first PPC (100) based on a first reference voltage and a measured voltage (Vdc) on the DC bus (120); and
sending the control signal to the one of the first AC-DC converter (100-1) and the second AC-DC converter (100-2) in the controlled mode.

15. The method according to claim 14, wherein the determining the control signal of the first PPC (100) based on the first reference voltage and the measured voltage on the DC bus (120) comprises:
calculating a second reference voltage based on the first reference voltage and a measured value of any of an output current or an output power of the first PPC (100), the second reference voltage being a droop function of the measured value of any of the output current or the output power; and
determining the control signal based on the second reference voltage and the measured voltage.

16. The method according to claim 15,
wherein a parameter of the droop function is determined at least based on a desired voltage on the DC bus (120) set by an upper controller.

17. The method according to any of claims 11 to 16, further comprising:
updating the control signal of the first PPC (100) based on a measured voltage on the third one (S3).

18. A system for power conversion comprising:
a DC bus (120);
a plurality of power sources (110, ..., 11n);
a power conversion system (PCS) connected to the DC bus (120); and
the apparatus according to any of claims 1-7.
